(19) Europäisches Patentamt
European Patent Office
Office européen des brevets

(11) **EP 0 693 681 B1**

(12) **EUROPEAN PATENT SPECIFICATION**

(45) Date of publication and mention
of the grant of the patent:
**02.01.2002 Bulletin 2002/01**

(51) Int Cl.⁷: **G01N 17/02**

(21) Application number: **95111315.8**

(22) Date of filing: **19.07.1995**

(54) **Apparatus and methods for measuring the ohmic-drop-free potential and for coating integrity evaluation in presence of stray currents**

Methode und Gerät zur Messung des ohmischen abfallfreien Potentials und zur Bewertung der Beschichtungsintegrität in Anwesenheit von Streuströmen

Méthode et appareil pour la mesure du potentiel ohmique sans chute, et pour l'évaluation de l'intégrité des revêtements en présence de courants vagabonds

(84) Designated Contracting States:
**AT BE CH DE DK ES FR GB GR IE IT LI LU MC NL PT SE**

(30) Priority: **22.07.1994 IT MI941561**

(43) Date of publication of application:
**24.01.1996 Bulletin 1996/04**

(73) Proprietor: **CESCOR S.r.l.**
**20134 Milano (IT)**

(72) Inventors:
• **Lazzari, Luciano**
**I-20090 Rodano (Milano) (IT)**
• **Bazzoni, Bruno**
**I-20123 Milano (IT)**
• **Duranti, Fabio**
**I-20040 Cavenago Brianza (Milano) (IT)**

(74) Representative: **Minoja, Fabrizio, Dr.**
**Bianchetti Bracco Minoja S.r.l. Via Rossini, 8**
**20122 Milano (IT)**

(56) References cited:
**EP-A- 0 229 573**     **EP-A- 0 259 253**
**WO-A-88/09498**     **US-A- 4 078 510**

• **PROCEEDINGS OF THE CONFERENCE ON CATHODIC PROTECTION-THEORY AND PRACTICE, THE PRESENT STATUS, 1982 COVENTRY, B.A.MARTIN 'Potential measurements of buried pipelines'**

## Description

Field of the invention

The invention relates to an apparatus and a method for measuring the ohmic drop free potential of metallic structures in environments, typically soils and concrete, in presence of stray currents.

The dc transit systems of railways and underground links have the positive pole connected to an aerial cable whilst the negative pole is the rail. The electrical circuit is then as follows: the current from the aerial cable goes through the train to the rail and then to the negative pole at the substation. Since the rail is laid on the ground, ballast or concrete slab, some returning current can be dispersed from the rail to the surrounding soil, because the soil resistance is generally low compared to the rail resistance.

If the current flowing through the soil from the rail to the substation meets a metallic structure such as a pipeline or a concrete structure, corrosion can take place because of interference, where the current leaves the metallic surface. To overwhelm the risk of corrosion when stray current are present, cathodic protection is generally used. To this regard, The usual monitoring method is the measurement of the potential consisting of the use of a reference electrode placed near the structure: this measurement results strongly affected by a spurious contribution due to the ohmic drop in the soil or in the concrete, caused by the flowing stray currents. This usual method cannot give the true potential of the structure.

On the contrary, the importance of knowing the true potential is twofold:

> it gives the correct potential of the structure, avoiding any corrosion conditions with potentials more positive than the protection value;
> it gives the real level of the overprotection conditions, which may affect the adherence of the coating (cathodic disbonding and chemical degradation) or may cause hydrogen embrittlement on susceptible materials (for instance, high strength steels used for pre-stressed and post-tensioned tendons or the heat affected zone of welds).

In presence of stray current, to eliminate the ohmic drop contribution, the gradient transversal method has been proposed and used, after T.J.Barlo and R. R.Fessler (AGA Dist. Conference, Anahaim, 1981) and B.A.Martin (Potential measurement on buried pipelines, in Proceedings of the Conference on Cathodic Protection - Theory and Practice, The present Status, Coventry, 1982).

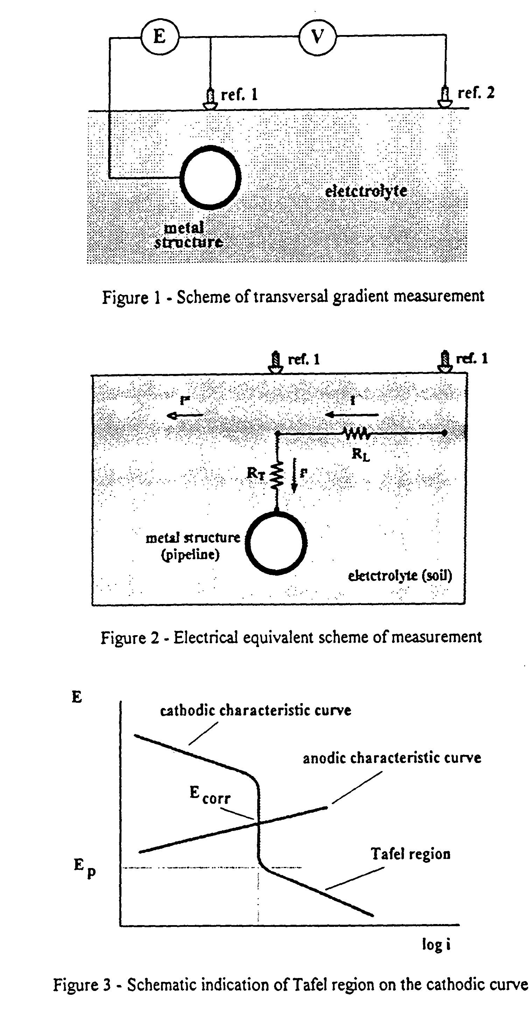

According to this method, the ohmic drop is eliminated by a graphic extrapolation. This is achieved by synchronised measurements of the potential and the transversal gradient by means of a close and a remote reference electrodes, as shown in Figure 1. By plotting the potential, E, and the transversal gradient, VL, the true, i.e. ohmic drop free potential, is represented by the intersection of the interpolating straight line with the potential axis, which simulates the zero flowing current condition.

To illustrate the meaning of E and VL, it is useful to refer to the scheme of Figure 2. Be I the stray current flowing through the soil at a certain time and I' the current exchanged with the pipeline (having cathodic direction). If all the current I flowing in the soil is picked up by the pipeline, the relation I' = I is verified; otherwise it will be I'= I - I", where I" is the part of the current I which does not affect the pipeline.

The transversal gradient, VL, between the two reference electrodes, 1 and 2, is proportional to the current I flowing in the soil; if RL is the equivalent lateral ohmic resistance it results:

$$VL = I(t)\ RL \qquad (1)$$

where I is time dependent.

In cathodically protected structures, the fairly rapid current variation leads to a generally negligible variation of the true potential (i.e., polarisation) Eoff (t) of the structure, since the potential belongs to the Tafel region of the cathode, i.e. the pipeline, polarisation curve, as schematically represented in Figure 3. However, in presence of strong, although slow, change of current, that is when electrical field variations are strong, the potential can vary (of little entity being operating on the straight line of Tafel equation) during the measurement time. In both situations, the potential can be expressed simply by the following relationship:

$$E\ (t) = I'(t)\ RT + Eoff\ (t) \qquad (2)$$

where RT is the equivalent resistance, I'(t) is the current exchanged with the structure and Eoff (t) is the true potential of the structure. When the currents I and I' of equations (1) and (2) are the same, they can be eliminated from the mentioned equations; when different, being the system ohmic, the two currents must have a constant ratio. In both cases, by eliminating the current from equations (1) and (2):

$$E\ (t) = Eoff\ (t) + VL\ K\ (RT\ /\ RL)\ (t) \qquad (3)$$

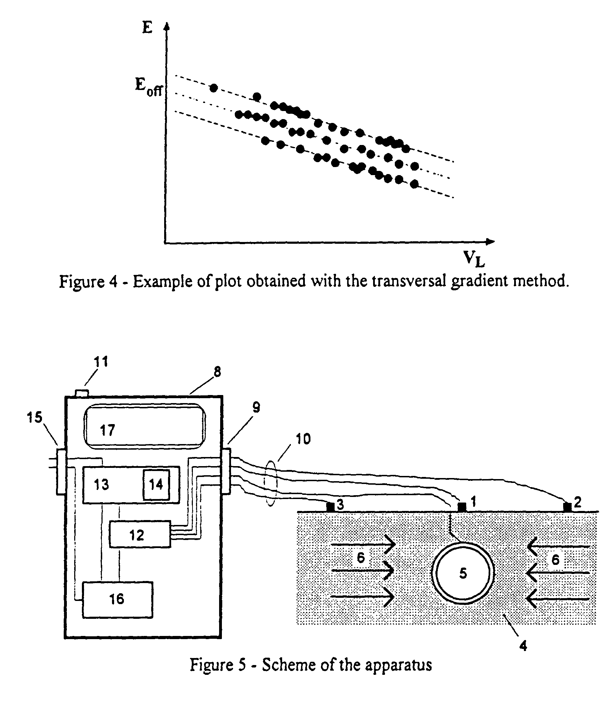

where K is the constant ratio of currents I and I'. Since RT and RL are constant during the measurement, the plot of E against VL is e set of parallel straight lines, of direction coefficient equal to a = = K (RT / RL); the intersection with potential axis, that means VL=0, the set of the Eoff potential is obtained as shown in Figure 4.

In conclusion, the method, which is applicable in presence of variable electrical fields, is based on two assumptions:

- the system must be ohmic;
- polarisation variations have to be negligible with respect to the ohmic drops.

These two assumptions lead to the linear relationship between potential and lateral ohmic drop. Accordingly, any set of measurements which comply the linearity has to be considered acceptable; in other words, the resulting linearity validates the method.

The parameters ALFA which is the direction coefficient of the extrapolating line permits to evaluate the insulating resistance of the coating and the equivalent size of the defect present in an ideally insulating coating. The algorithms described elsewhere in a paper (B.Bazzoni, L.Lazzari, "The Lateral Gradient Technique for Potential Measurements in Presence of Stray Current", CORROSION/96 Conference, NACE International, Houston, TX, paper no.96202, 1996) are the following:

$$R_o = \alpha \; \rho \; f; r = H / \alpha$$

where $R_o$ is the coating insulating resistance; r the equivalent coating defect size (radius) $\alpha$ the direction coefficient; $\rho$ the soil resistivity; H the cover; and f is a correction factor, always higher than 1. The correction factor f, although uneasy to be calculated, can be assumed, on the base of field trials, equal to 100, with probable underestimation of the true value of the insulating resistance.

This method has never been used for concrete structures affected by stray currents. By adopting the transversal gradient method to reinforced concrete structures, it has to be taken in mind that steel in concrete shows different electrochemical behaviour, so that the potential shift is different and depending upon the corrosion status of the reinforcement, that is the passive conditions (which are to be regarded as the usual conditions) or active in case of carbonation or chloride contaminated concrete. Furthermore, concrete reinforcement are not cathodically protected.

With respect to the modelling illustrated for buried steel, where the stray current does not change the potential when cathodically protected, because it belongs to the straight line of Tafel equation, the current exchanged with the steel reinforcement provoke a sensible shift of the potential, that is a variation of the polarisation. Experimental tests established that the relationship between potential and current can be considered linear; this allows to adopt the method, the transversal gradient to be extrapolated to zero.

The interpretation depends upon the type of structure, whether metallic or concrete one. If it is a buried metallic structure, the estrapotated potential has the meaning of the true potential of the structure cathodically protected; in the case of concrete structure, the potential E0 has the meaning of the natural spontaneous potential of the reinforcements in absence of stray currents.

Description of the invention

The present invention provides an apparatus for measuring the potential of a metallic structure affected by stray currents and able to eliminate the ohmic drop contribution through the transversal gradient method, either for metallic structures cathodically protected or concrete structures (buried or aerial).

The apparatus comprises: a device (10) fabricated with three reference electrodes (1,2,3) with variable and predetermined spacing and the electrical connection to the structure; a unit for the automatic acquisition of a sufficient number of simultaneous measurements of the potential and the transversal gradient; a unit for the calculation of the fitting line by means of linear regression method and the extrapolation to the zero transversal gradient; a unit for the recording of the measurements and the results; a unit for the visual display; a feeding system.

In a preferred version, shown in figure 5, the apparatus comprises the device consisting on three independent reference electrodes (1,2,3) to be located in contact with the environment (4) (soil or concrete) the electrical contact (5) with the structure interested to the stray current (6); the entire apparatus (8) connected to the device (10) by means of the connector (9). The apparatus is switched on by means of the switch (11) whilst the A/D device converter (12) performs the simultaneous measurements of the potential of structure (5) against the reference electrode (1) and the transversal gradients measured between the reference electrodes 1 through 2 and 1 through 3; the microprocessor (13) carries out the reading treatment to determine the ohmic-drop-free potential; the readings and the results are stored in the memory (14) and can be visualised on the display (17) or transferred to a personal computer or to a printer by means of the connector 15; the rechargeable battery (16) assures a sufficient operating autonomy for the measurements.

During the acquisition phase, the apparatus gathers every T seconds N simultaneous measurements of the structure potential E and the transversal gradients VL1 and VL2, recording also the date and time. N varies between 50 to 5000 and T between 0.1 to 10 seconds. The apparatus then calculates the minimum, maximum and average values of E, VL1 and VL2, executes the linear regression, calculating the values of parameters a, b and c, and calculate the direction coefficient alfa1 and alfa2 of interpolating straight lines. It evaluates the potentials E01 and E02 obtained by extrapolation VL1 and VL2 to zero, which should result equal to E0 in the ideal situation.

The apparatus is fabricated in different versions.

A first version of the apparatus is a portable instrument to be connected to the structure, either buried or concrete, and to three reference electrodes. The portable instrument gathers the measurements in accordance with the chosen frequency and duration; shows on the display the extrapolated potential insulating resistance, coating size defect and other parameters. It permits to set-up the acquisition parameters and to record a meaningful set of measurements.

A second version comprises a personal computer equipped with and an A/D device converter, connected as in the previous case to the structure and to the reference electrodes, which executes the sequence of operations.

A third version of the apparatus is intended as an instrument to be installed for a period of time comprised between few days to few months at the measuring test post. The apparatus is provided of water proof case for external exposure. It executes the sequence of operations. To reduce the memory, the instrument is able to start the measuring sequence only when the transversal gradient, for instance VL1, exceeds a pre-determined threshold. This allows the instrument to carry out the measurements during effective periods, when stray currents are present (during daylight and intense traffic).

A fourth version is specifically intended for the automatic regulation of the cathodic protection systems utilised to overwhelm stray currents. This version of the apparatus executes all measurements and sequence of operation as previously described to determine the ohmic-drop-free potential insulating resistance, coating defect size and is connected to the feeding unit of the cathodic protection for the regulation in accordance with the true potential of the structure.

Each version of the apparatus can be equipped with traditional usual accessories, such as: cases with different degrees of protection; analogic display; serial port for the connection to personal computer, printers, modem; keyboard for the set-up of parameters.

The probe can comprise fixed reference electrodes, having pre-determined spacing and distance from reinforcement, embedded in the concrete.

## Claims

1. An apparatus for measuring in presence of stray currents (6) the ohmic drop free potential of cathodically protected buried metallic structures (5) and steel reinforcements embedded in concrete, comprising a probe (10) consisting of three reference electrodes (1, 2, 3) with a prefixed variable spacing and the connection to the metallic structure; a unit for the automatic acquisition of a sequence of sufficiently numerous simultaneous readings of the potential of the buried metallic structure or reinforcements against a first reference electrode (1) and of the two transversal gradients at each side of the structure measured between said first reference electrode (1) and a second reference electrode (2), and between said first reference electrode (1) and the third electrode (3), respectively; an elaboration unit which, for each sequence of readings, carries out the linear regression of the potential and gradient readings and the extrapolation of the potential at zero gradient for both sides of the structure from the extrapolation of the whole set of readings; a unit for the recording of the sequences of readings and of the results of the elaboration; a unit for the visualisation of the results and for the transfer of the sequences of readings; a power source.

2. The apparatus as claimed in claim 1, which elaborates the measurement results obtained from buried coated structures (pipelines, tanks, cables, coated metallic sheaths), in such a way as to calculate the coating insulating resistance and the equivalent defect size.

3. The apparatus as claimed in claims 1 and 2, wherein the acquisition and elaboration units constitute a portable apparatus to be connected to the probe (10) and to the structure in correspondence to a test post.

4. The apparatus as claimed in claims 1 and 2, where the acquisition and elaboration units consist of a personal computer comprising the analogic to digital converter and dedicate software.

5. The apparatus as claimed in claims 1 and 2, where the acquisition and elaboration units constitute a fixed instrument equipped with a waterproof case and installed at a test post.

6. The apparatus as claimed in claims 1, 2 and 4, where a set of periodical measurements is made to provide the variation of the polarization of the structure along a determined interval of time.

7. The apparatus as claimed in claim 5 or 6, to be used to drive impressed current cathodic protection systems for the automatic regulation of the feeding unit on the base of the measured ohmic drop free potential.

8. The apparatus as claimed in anyone of the previous claims, wherein the reference electrodes are fixed in the soil or embedded in the concrete, with predetermined spacing.

9. The apparatus as claimed in anyone of the previous claims, wherein the acquisition and elaboration units start to operate when the gradient exceeds a prefixed threshold.

## Patentansprüche

1. Einrichtung zum Messen des ohmschen abfallfreien Potenzials von kathodisch geschützten vergrabenen Metallstrukturen (5) und in Beton eingebetteten Stahlbewehrungen, in Gegenwart von Streuströmen (6), umfassend eine Sonde (10), die aus drei Bezugselektroden (1, 2, 3) mit vorfixiertem, variablem Abstand und der Verbindung zu der Metallstruktur besteht; eine Einheit für die automatische Erfassung einer Folge bzw. Reihe von genügend zahlreichen gleichzeitigen Messungen des Potenzials der vergrabenen Metallstrukturen oder Bewehrungen gegen eine erste Bezugselektrode (1) und der beiden Transversalgradienten auf jeder Seite der Struktur, gemessen zwischen der ersten Bezugselektrode (1) und einer zweiten Bezugselektrode (2) bzw. zwischen der ersten Bezugselektrode (1) und der dritten Elektrode (1) ; eine Verarbeitungseinheit, welche für jede Folge bzw. Reihe von Messungen die lineare Regression der Potenzial- und Gradientenmessungen und die Extrapolation des Potenzials auf bzw. bei Nullgradient für beide Seiten der Struktur von bzw. aus der Extrapolation des gesamten Satzes von Messungen ausführt; eine Einheit für die Aufzeichnung der Folgen bzw. Reihen von Messungen und der Ergebnisse der Verarbeitung; eine Einheit für die Sichtbarmachung der Ergebnisse und für die Übertragung der Folgen bzw. Reihen von Messungen; eine Leistungs- bzw. Stromquelle.

2. Einrichtung nach Anspruch 1, welche die von den vergrabenen beschichteten Strukturen (Pipelines, Tanks, Kabeln, beschichteten Metallhüllen) erhaltenen Messergehnisse, in einer solchen Art und Weise verarbeitet, dass sie den Beschichtungsisolationswiderstand und die äquivalente Defektgröße berechnet.

3. Einrichtung, wie in den Ansprüchen 1 und 2 beansprucht, worin die Erfassungs- und Bearbeitungseinheit eine trag- bzw. transportierbare Einrichtung bilden, die mit der Sonde (10) und mit der Struktur in Korrespondenz zu einem Testpfosten bzw. -ständer zu verbinden ist.

4. Einrichtung, wie in den Ansprüchen 1 und 2 beansprucht, worin die Erfassungs- und Verarbeitungseinheit aus einem Personalcomputer bestehen, der den Analog-zu-Digital-Wandler und gewidmete Software umfasst bzw. enthält.

5. Einrichtung, wie in den Ansprüchen 1 und 2 beansprucht, worin die Erfassungs- und Verarbeitungseinheit ein festes bzw. ortsfestes Instrument bilden, das mit einem wasserdichten Gehäuse ausgerüstet und an bzw. in einem Testpfosten bzw. -ständer installiert ist.

6. Einrichtung, wie in den Ansprüchen 1, 2 und 4 beansprucht, worin ein Satz von periodischen Messungen gemacht wird, um die Variation der Polarisation der Struktur längs eines bestimmten Zeitintervalls zu liefern.

7. Einrichtung, wie im Anspruch 5 oder 6 beansprucht, die zum Antrieb von kathodischen Schutzsystemen mit eingeprägtem Strom für die automatische Regulierung der Speiseeinheit auf der Basis des gemessenen ohmschen abfallfreien Potenzials zu verwenden ist.

8. Einrichtung, wie in irgendeinem der vorhergehenden Ansprüche beansprucht, worin die Bezugselektroden mit vorbestimmtem Abstand in dem Erdboden befestigt bzw. fixiert oder in dem Beton eingebettet sind.

9. Einrichtung, wie in irgendeinem der vorhergehenden Ansprüche beansprucht, worin die Erfassungs- und Verarbeitungseinheit zu arbeiten beginnen, wenn der Gradient einen vorfixierten Schwellwert überschreitet.

## Revendications

1. Appareil pour mesurer en présence de courants vagabonds (6), le potentiel libre de chute ohmique de structures métalliques enterrées (5) protégées par protection cathodique et d'armatures en acier noyées dans du béton, comprenant une sonde (10) composée de trois électrodes de référence (1, 2, 3) présentant un espacement variable prédéterminé et de la connexion à la structure métallique ; une unité pour l'acquisition automatique d'une séquence de lectures simultanées suffisamment nombreuses du potentiel de la structure métallique enterrée ou des armatures par rapport à une première électrode de référence (1) et des deux gradients transversaux de chaque côté de la structure mesurés respectivement entre ladite première électrode de référence (1) et une deuxième électrode de référence (2) et entre ladite première électrode de référence (1) et la troisième électrode (3) ; une unité d'élaboration qui, pour chaque séquence de lectures, effectue une régression linéaire dés lectures de potentiels et de gradients et l'extrapolation du potentiel à gradient zéro pour les deux côtés de la structure, à partir de l'extrapolation du jeu complet de lectures ; une unité pour l'enregistrement des séquences de lecture et des résultats de l'élaboration ; une unité pour la visualisation des résultats et pour le transfert des séquences de lectures ; et une source d'alimentation.

2. Appareil selon la revendication 1, qui élabore les résultats de mesures obtenus à partir des structures revêtues enterrées (conduites, réservoirs; câbles, gaines métalliques revêtues), de manière à calculer la résistance d'isolation du revêtement et la dimension du défaut équivalent.

3. Appareil selon les revendications 1 et 2, dans lequel les unités d'acquisition et d'élaboration constituent un appareil portatif qui est destiné à être connecté à la sonde (10) et à la structure au niveau d'un piquet de test.

4. Appareil selon les revendications 1 et 2, dans lequel les unités d'acquisition et d'élaboration sont constituées par un ordinateur personnel qui comprend le convertisseur analogique-numérique et un logiciel dédié.

5. Appareil selon les revendications 1 et 2, dans lequel les unités d'acquisition et d'élaboration constituent un instrument fixe équipé d'un boîtier étanche à l'eau et montésur un piquet de test.

6. Appareil selon les revendications 1, 2 et 4, dans lequel un jeu de mesures périodiques est exécuté pour assurer la variation de la polarisation de la structure sur un intervalle de temps déterminé.

7. Appareil selon la revendication 5 ou 6, destiné à être utilisé pour activer des systèmes de protection cathodique à courant forcé pour la régulation automatique de l'unité d'alimentation sur la base du potentiel libre de chute ohmique mesuré.

8. Appareil selon l'une quelconque des revendications précédentes, dans lequel les électrodes de référence sont fixées dans le sol ou noyées dans le béton, à un espacement prédéterminé.

9. Appareil selon l'une quelconque des revendications précédentes, dans lequel des unités d'acquisition et d'élaboration commencent à opérer lorsque le gradient excède un seuil préfixé.

Figure 1 - Scheme of transversal gradient measurement

Figure 2 - Electrical equivalent scheme of measurement

Figure 3 - Schematic indication of Tafel region on the cathodic curve

Figure 4 - Example of plot obtained with the transversal gradient method.

Figure 5 - Scheme of the apparatus